# EUROPEAN PATENT APPLICATION

(11) **EP 4 332 166 A1**
(43) Date of publication of application: **06.03.2024**
(21) Application number: 21940349.0
(22) Date of filing: 23.06.2021
(51) Int. Cl.: C08L 77/00, C08L 67/00, C08K 5/053, C08K 5/17, C08J 5/18, B32B 5/02, B32B 7/12, B32B 27/12, B32B 27/34, B32B 27/36

(54) **FILM FORMED OF WASTE THERMOPLASTIC ELASTOMER AND LAMINATE THEREOF**

(30) Priority: 19.05.2021 CN 202110546451
(71) Applicant: Foshan King Wonder Hi-tech Co., Ltd., Foshan, Guangdong 528100 (CN); Jack Wolfskin Ausrüstung für Draussen GmbH & Co. KGaA, 65510 Idstein (DE); Topgolf Callaway Brands Corp., Carlsbad, CA 92008 (US)
(72) Inventor: LIN, Yuwei, Foshan, Guangdong 528100 (CN); XU, Yingbo, Foshan, Guangdong 528100 (CN); ZENG, Donghui, Foshan, Guangdong 528100 (CN); YAN, Zhijian, Foshan, Guangdong 528100 (CN); GRASSO, Daniele, 65510 Idstein/Ts (DE); WONG, Wai Hing Imen, 65510 Idstein/Ts (DE)
(74) Representative: Canzler & Bergmeier Patentanwälte Partnerschaft mbB
(86) International application number: PCT/CN2021/101729
(87) International publication number: WO 2022/241900

(57) **Abstract**

Disclosed in the present invention are a film prepared from a waste thermoplastic elastomer and a laminate thereof. Compositions for forming the film comprise: 0.5%-99.8% of a waste thermoplastic elastomer, 0.01%-3% of a viscosity modifier, 0.01%-10% of a slipping agent for preventing the prepared film from being bonded when the film is rolled, and 0%-99% of a fresh thermoplastic elastomer; the thermoplastic elastomer is a polyester elastomer, a nylon elastomer, a biologically sourced nylon elastomer and/or a biologically sourced polyester elastomer, and a graft thereof; the viscosity modifier is a reactive viscosity modifier and/or a non-reactive viscosity modifier; and the slipping agent is a fatty acid and esters thereof, fatty acid amide, a metallic soap, hydrocarbons, an organosilicon compound, stearic acid, butyl stearate and/or ethylene bis stearamide. A thermally-stitched seam of the present invention has the characteristics of having excellent waterproof and vapor permeable performance, being capable of blocking viruses and liquids, being smooth in appearance without wrinkles and soft in touch feeling and the like. The film prepared in the present invention has good moisture permeability, washing performance, tensile strength, and required touch feeling softness.

## Description

### Field of the invention

The present invention relates to the recycling and utilization of waste plastics, especially waste thermoplastic elastomer. More specifically, the present invention relates to a film formed from waste thermoplastic elastomer and laminate thereof.

### Background of the invention

Thermoplastic elasticity (TPE) has plasticity at high temperatures and can be reshaped, while it also has elasticity at room temperature. The development of thermoplastic elastomer, due to its excellent mechanical properties, processing properties and weather resistance, has reached a considerable high level. New varieties are constantly emerging and many of them have extensively replaced some traditional rubber and plastic materials, which are widely used in wires and cables, sealing materials, diaphragm products, shoe making industry, automotive industry, mechanical industry, and various industrial mold products. According to the different types of main components of TPE, it can be roughly classified as 7 categories, namely polyamide-based thermoplastic elastomer, copolyester-based thermoplastic elastomer, polyolefin-based thermoplastic elastomer, styrene-based thermoplastic elastomer, polyurethane-based thermoplastic elastomer, thermoplastic vulcanizate, and other thermoplastic elastomer.

However, while plastic products bring convenience to people's lives, the pollution of waste plastics on the environment has caused the Earth to be overwhelmed. Thermoplastic elastomer has some serious drawbacks, such as poor biodegradability and difficulty in degradation when buried in soil. Facts have proven that both landfill and incineration are not good treatment choices. If low-cost recycling treatment can be carried out, it would be a better choice.

In the prior art only Chinese patent CN 201310666587.5 discloses a method for utilizing waste thermoplastic elastomer, comprising the following steps: adding 80-95 parts of waste polystyrene material, 5-15 parts of waste thermoplastic elastomer, 0.1-0.3 parts of heat stabilizer, 0.1-0.4 parts of antioxidant, 0.1-0.3 parts of ultraviolet absorbent, 1-3 parts of reinforced filler and 0.1-0.3 parts of white oil in a mass ration and stirring evenly, melting and mixing at 170-210°C, cooling and dicing into grains after being extruded and tracted, and obtaining high impact polystyrene pellets. The above-mentioned invention provides a suitable utilizing method for waste thermoplastic elastomer as well as a new method for reducing the cost of toughened high impact polystyrene.

Therefore, it is necessary to provide more technical solutions for utilizing waste thermoplastic elastomer. For example, applying waste thermoplastic elastomer to clothing products to replace their non-reusable parts is one of the main issues that need to be addressed in existing technology.

### Summary of the invention

The object of the present invention is to provide a film and laminate thereof prepared from waste thermoplastic elastomer, wherein the film can be used for bonding onto clothing fabric, shoe fabric, luggage fabric, glove fabric and hat fabric, making device, packaging food, and other purposes.

As one aspect, in order to achieve the above objective, the present invention provides a film prepared from waste thermoplastic elastic material with a thickness of 3 µm-1000 µm. By weight percentage (the same hereafter), the film comprises
0.5% -99.8% of waste thermoplastic elastomer,
0.01% -3% of viscosity modifier,
0.01% -10% of slipping agent used for preventing the prepared film from being adhered when the film is rolled, and
0% -99% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein viscosity modifier is a reactive viscosity modifier and/or a non-reactive viscosity modifier in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, N,N-ethylenedi(stearamide) (refered also as ethylene bis-stearamide), EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

The waste thermoplastic elastomer used in the present invention can be leftover material and/or off-cutting material.

The slipping agent used in the present invention is to prevent adhesion during the film preparation process, especially during the film winding procedure. Therefore the slipping agent is different from a lubricant used in normal plastic processing.

Generally there are three types of commonly used slipping agents in a film making process: oleic acid amide (oleamide), erucic acid amide (erucamide), and silica (inorganic powder). However, organic slipping agents such as oleic acid amide and erucic acid amide are not suitable for the film of the present invention with a large amount of precipitates gathering on the surface of the film and causing severe frost, which would affect the printability, heat sealing and color of the film as well as the subsequent bonding procedure. Inorganic powder is a kind of opening agent which would affect the subsequent bonding of the film of the present invention as well as its usage. Therefore, one of the prerequisites for selecting a slipping agent in the present invention is that it should not have any influence on subsequent bonding procedure.

Preferably, the slipping agent of the present invention is fatty acids and their esters.

Similarly, in order to prevent the printability, heat sealing and color of the prepared film from being affected, as well as to prevent the subsequent bonding procedure from being affected, the viscosity modifier in the present invention is preferably a reactive viscosity modifier. For example, the reactive viscosity modifier can be one or more alcohol chain extenders selected from the group consisting of 1,4-butanediol (BDO), 1,6-hexanediol, glycerol, trimethylolpropane, diethylene glycol (DEG), triethylene glycol, Neopentyl glycol (NPG), sorbitol, and diethylaminoethanol (DEAE).

Alternatively, the reactive viscosity modifier may be one or more amine chain extenders and/or ester chain extenders selected from the group consisting of MOCA, liquid MOCA modified with formaldehyde, ethylenediamine (DA), N,N-dihydroxy (diisopropyl) aniline (HPA), hydroquinone bis(β- hydroxyethyl) ether (HQEE), bifunctional acid derivatives, isocyanates, anhydrides, epoxide, and glycidyl esters as well as their multifunctional derivatives.

More preferably, the viscosity modifier is epoxide, glycidyl esters and their multifunctional derivatives, because they are structurally similar to and compatible with thermoplastic elastomer, and will not cause a decrease in moisture permeability, elastic recovery, etc. of a thermoplastic elastomer film. More importantly, they are even helpful. Further more preferably, the viscosity modifier is epoxide, glycidyl esters, and their multifunctional derivatives with fewer functional groups, which will not cause flash polymerization. For example, it can have 2-4 functional groups, especially 3 functional groups.

In a specific embodiment of the present invention, the prepared film comprises
2.5% -99.8% of waste thermoplastic elastomer,
0.01% -2% of viscosity modifier,
0.01% -10% of slipping agent without influence on subsequent bonding, and
0% -90% of fresh thermoplastic elastomer.

In order to increase the utilization of waste thermoplastic elastomer, in another specific embodiment of the present invention, the prepared film comprises
80% -99.8% of waste thermoplastic elastomer,
0.01% -2% of viscosity modifier,
0.01% -10% of slipping agent without influence on subsequent bonding, and
0% -10% of fresh thermoplastic elastomer.

In general, the film of the present invention may also comprise some processing agents, such as antioxidants, UV agents, etc.

The film of the present invention can be in any color, and for a specific color 0.1-45% color powder (toner) can be added into the formula of the film.

In addition, the formula of the film of the present invention can also include some functional additives such as flame retardant, aerogel, infrared powder, graphene, calcium carbonate, titanium dioxide, phase change materials and other types of inorganic and organic functional powders with the proportion of 0-70%. But one of the prerequisites is that the subsequent bonding will not be affected by additive(s). Therefore extra attention should be given to specific selection and dosage.

In the present invention, the forming method of a film (which can also be referred to as a sheet for a thicker film) can be as follows: hot melt forming extrusion using an extruder such as tape casting, blowing, spraying, extruding to a vacuum hole for forming, rolling, bi-axial stretching, and unidirectional stretching. Later drilling on the film can be accomplished by laser, chemical corrosion, needle pricking, pressing with a pattern roller, ultrasonic drilling, etc.

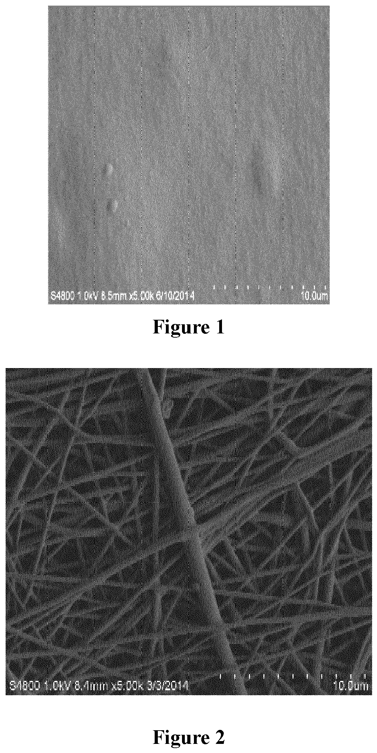

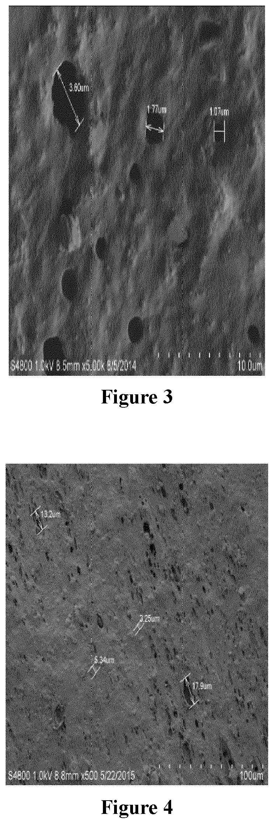

The micro-structure of the film prepared by the present invention can be porous or non-porous with only molecular gaps, as shown in Figures 1-6.

The film prepared in the present invention (also known as the sheet if its thickness is relatively large) can be washed for 3-100 times according to ISO 6330, preferably 3-50 times. The typical moisture permeability value according to JIS L 1099 B1 is 100-180000, and the static water pressure value according to JIS L 1092 is above 10000 mm H2O. The film has a soft feel (the elastic modulus value is acceptable within 300 MPa, ASTM D882), a uniform appearance and no obvious adhesive spots, and it is suitable for clothing, shoe, glove, hat, bag, surface bonding or packaging of special devices which require moisture permeability function (such as electronic products, electronic devices, etc.), and surface bonding or packaging of food which requires moisture permeability function, especially for clothing purposes.

More specifically, the usage of the film prepared by the present invention can be one of the following:
(1) bonding onto clothing fabric with a film thickness of 5µm-50µm,
(2) bonding onto shoe fabric with a film or sheet thickness of 10-500µm,
(3) bonding onto the surface fabric for gloves or hats with a film thickness of 8-80µm,
(4) bonding onto the surface fabric for a luggage with a film or sheet thickness of 50-1000µm,
(5) bonding onto the surface or as packaging for instruments which require moisture permeability with a film or sheet thickness of 15-1000µm, and
(6) bonding onto the surface or as packaging for a food which requires moisture permeability with a film or sheet thickness of 15-1000µm,

In addition, the film or sheet prepared in the present invention can perform various surface treatments, which can be various functional treating coatings or discontinuous coatings, especially printing, functional printing (suitable for UV curing ink, screen printing, heat transfer printing, O-LED printing, roller printing, computer printing, etc., which can be any pattern), hydrophobic treatment, hydrophilic treatment, UV or IR barrier treatment, color treatment, inorganic or organic functional coatings such as graphene coating, aerogel layer, phase change cold feeling, heat sensing, temperature sensitive, pressure sensitive, etc. It can also be pattern burning treatment by surface chemical or various activation treatments such as surface corona, plasma, oxidation, etc. The thickness of the surface treatment layer is preferably more than 0.5µm,

As another aspect, in order to achieve the above objective, the present invention also provides a laminate containing waste thermoplastic elastomer, comprising:
at least one layer formed by non-woven and/or textile fabrics with a gram weight of 7-1000 gsm, and
at least one layer formed by a composition containing waste thermoplastic elastomer with a thickness of 5-1000µm,
wherein the composition containing waste thermoplastic elastomer comprises
0.5% -99.8% of waste thermoplastic elastomer,
0.01% -3% of viscosity modifier,
0.01% -10% of slipping agent used for preventing the prepared layer from being adhered when the film is rolled, and
0% -99% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein the viscosity modifier is a reactive viscosity modifier and/or a non-reactive viscosity modifier in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

Preferably, in the laminate of the present invention, an adhesive layer is further comprised between the layer formed by non-woven fabric and/or textile fabric and the layer formed by a composition containing waste thermoplastic elastomer. The adhesive layer is formed by hot melt adhesive, solvent adhesive, or water-based adhesive with a gram weight of 3-80 gsm.

For example, the film or sheet prepared by the present invention can be laminated with non-woven and textile fabrics to obtain a laminate, or directly coated or laminated with a hot melt adhesive layer, or a layer of hot melt adhesive on the film or fabric surface is formed before a laminate is formed. The latter two are preferably used for pre-coated adhesive, followed by sealing strips at the stitching position and composite with other laminated materials, ultimately achieving the complete recovery of the entire product through re-melting. The hot melt adhesive layer can be continuous or discontinuous.

In the laminate of the present invention, the used film or sheet can be entirely obtained from waste thermoplastic elastomer (except for viscosity modifiers, slipping agents, and possible functional additives), without or with little fresh thermoplastic elastomer. The thickness of the film or sheet can be 5-1000µm, The preferred choice is 5-50µm for clothing, 10-500µm for shoe, 50 to 1000µm for luggage, and 8-500µm for adhesive strips.

The laminate of the present invention can be a three-layer composite structure (the adhesive layer is considered as one layer, the same below), that is, one layer of textile fabric is bonded to a layer of film or sheet through adhesive. It can also be a 5-layer composite structure, that is, two layers of textile fabric are bonded to a layer of recycled film or sheet through adhesive in the middle. It can also be a composite structure with more layers.

In the laminate of the present invention, the fabric structure of the selected textile fabric can be fabric material (bonded to fleece, tricot backers, knots (mesh and jersey, single and double knit), woven (riptop and plain weave, twist, single and double weaves)), foam, air layer, non-woven fabric, cotton (multi-layer interface, natural cotton, Thinsulate, etc.). The material of the fabric can be PP, PE, PET, PLA, PBAT, PVA, nylon, polypropylene fiber, ultra-high density polyethylene, polyvinyl chloride, polystyrene, polymethyl methacrylate, polyester, polyformaldehyde, polyamide, polyphenylene ether, polyurethane, polysulfone, rubber, poly(ether-ether-ketone) (PEEK), PPS, polyimide (PI), polyether imide (PAI) and other synthetic fiber resins which can be used alone or in mixtures, or recycled material alone or in mixtures, or natural fabrics.

In the laminate of the present invention, it is necessary to ensure that the moisture permeability is above 100g/m²*24h and that the washing times can be more than 3 times. The adhesive can be polyurethane, polyester, APEO, nylon and others selected from hot melt adhesives, solvent adhesives, and water-based adhesives. The adhesive layer can be any discontinuous adhesive point such as dots, grids, spray-rays, patterns, etc. Processes, which do not require glue, such as burning, pouring, regular hot pasting, and so on, can be also applied.

Method of bonding: the adhesive can be pre-coated on the film (sheet) or fabric, and then the fabric and film (sheet) can be laminated by heating. It can also be laminated while applying glue. The surface of the fabric or film (sheet) can also be activated to have a bonding effect through sintering method in order to bond together.

The formula of the laminate in the present invention can be adjusted based on its occasion so as to have suitable washing performance, moisture permeability, soft hand feel, etc.

The present invention will be further explained in combination with the drawings and specific embodiments, but these specific embodiments are only explanations for some specific descriptions of the present invention and are not limitations of the present invention.

### Brief description of the drawings

Figure 1 is a SEM image to show the film structure without strictly physical significant pores;
Figure 2 is a SEM image to show the interlaced structure of nano-fibers formed by electro-spinning;
Figure 3 is a SEM image to show the film structure with solution pores;
Figure 4 is a SEM image of the film structure with physically stretched pores;
Figure 5 is a SEM image of the structure formed by the method of direct-laying nonwoven;
Figure 6 is a SEM image of the film structure with regular physical mechanical pores; and
Figure 7 is testing curves of elastic modulus.

### Description of embodiments of the invention

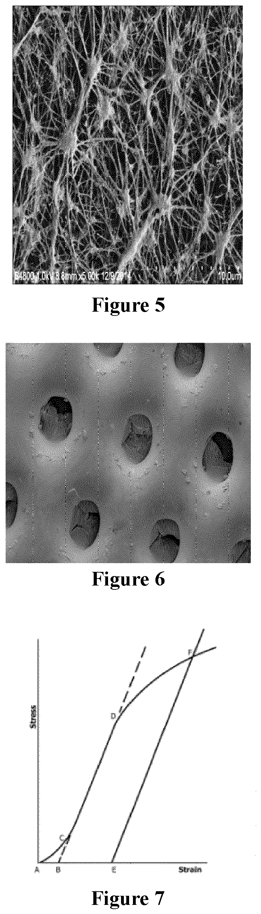

In the following specific embodiments, the testing methods for moisture permeability, hydrostatic pressure, elastic modulus and elongation at break are as follows:
(1) Hydrostatic pressure detection:
   A) Detection standard: AATCC127
   B) Sampling standard: Take at least three 200 mm*200 mm samples diagonally and avoid folding and contamination of the testing area. The samples should be humidified at (21 ± 2) °C and (65 ± 2)% for at least 4 hours before testing, and the front and back sides of the samples needs to be distinguished when testing;
   C) Detecting method: Under the condition of (21 ± 2) °C wipe dry the surface of the clamping device, and after humidity adjustment hold the sample to make its front surface come into contact with the water surface. Select a testing program with a pressure increase rate of 60 mbar/min, and record the water pressure value at the time of the third drop of water. The three drops should be different and not within 3mm of the edge of the clamping device.
(2) Moisture permeability: JIS L1099 B1 method Potassium acetate method:
   Equipment: Temperature of the incubator: 30 ± 2 °C, temperature of the water tank in the incubator: about 23 °C, and moisture permeable cup with an inner diameter of 56mm and a height of 75mm;
   Auxiliary film: PTFE film with a pore size of 80% and a thickness of 25um which is used to seal the mouth of the moisture permeable cup with hygroscopic agent in it;
   Hygroscopic agent: crystal formed by adding every 100ml of deionized water into each 300g of potassium acetate and leaving it to stay for one day and night;
   Sampling: approximately 20cm x 20cm;
   Testing steps:
      Fix the sample on the support frame with rubber tape, and then place it in the water tank of the incubator with constant temperature in a depth of about 10mm for 15 minutes. Put 2/3 of the hygroscopic agent (about 23 °C) into the moisture permeable cup, fix the cup mouth with auxiliary film and rubber tape, weigh the loaded cup in the balance and record its weight as a1, and after weighing place the cup upside down on the fixed test sample. After 15 minutes, take out the cup, weigh it in a balance and record its weight as a2, and then calculate the moisture permeability.
(3) Elastic modulus: ASTM D882:
   Equipment: A tensile machine with stable movement speed, a thickness gauge with accuracy of 0.0025 mm, and a film sample cutting machine without visible gaps, serrations, etc in a cut sample;
   Sampling: cut the sample according to the required testing direction with a width of 15 mm and a length of 300 mm (if there are obvious notches or serrations in a cut sample, it should be discarded and re-cut), prepare at least 5 samples in each direction, and then place the cut samples at 23 ± 1 °C and a relative humidity of 50 ± 5% for not less than 40h;
   Testing steps:
      After resetting the force value to zero set the tension machine with a fixture spacing of 250 mm between clamps and a stretching speed of 25 mm/min according to the selected load sensor; and
      Measure the thickness and width of the sample and input it into the software of the tensile machine. Clamp the sample, set the initial force value to 0 as far as possible, and then click to start. When the inflection point with the maximum slope appears in the figure (as shown in Figure 7), stop the test, read and record the result (Mpa).
(4) Elongation at break: ASTM D882:
   Equipment: A tensile machine with stable movement speed, a thickness gauge with accuracy of 0.0025 mm, and a film sample cutting machine without visible gaps, serrations, etc in a cut sample;
   Sampling: cut the sample according to the required testing direction with a width of 15 mm and a length of 300 mm (if there are obvious notches or serrations in a cut sample, it should be discarded and re-cut), prepare at least 5 samples in each direction, and then place the cut samples at 23 ± 1 °C and a relative humidity of 50 ± 5% for not less than 40 h;
   Testing steps:
      After resetting the force value to zero set the tension machine with a fixture spacing of 50 mm between clamps and a stretching speed of 500 mm/min according to the selected load sensor; and
      Clamp the sample, set the initial force value to 0 as far as possible, and then click to start. Read and record the elongation% of the sample at the time of fracture when the sample breaks (if there is a sliding during a testing process or a sample breaks at its defect, then the result is invalid).

### Preparation of films:

The melt of the above formula can flow out through the gap at the front end of the mold and form a film. After leaving the mold, the melt passes through a short gap and reaches the surface of a casting roller with low temperature, rapidly cooling and shaping. The melt of the above formula can also be blown out through a rotating die with high-pressure air to form a tubular film. After leaving the rotating die, the melt passes through a short gap and reaches the surface of a casting roller with low-temperature, rapidly cooling and shaping. The above formula can also be melted and extruded into a vacuum hole for molding, the flat and hard sheet can be heated and softened, and then vacuum adsorbed on the surface of the mold, cooled, and then formed.

The above formula can also be plasticized to a temperature close to the viscous flow temperature through a series of horizontally roller gaps rotating towards each other, allowing the material to withstand extrusion and extension and then become a thin sheet shaped product with a certain thickness, width and surface smoothness. Furthermore, the above-mentioned film or sheet can be subjected to bi-axial or unidirectional stretching on longitudinal and transverse directions for a thick film or a casting sheet at temperatures below the melting point of the formula material and above its glass transition temperature, and then subjected to appropriate cooling or heat setting treatment or other special processing (such as corona discharge, coating, etc.) under a tension state.

Regarding drilling on it, the above-mentioned film or sheet can be punched mechanically, and high-strength drilling needles can be driven by a mechanical shaft to drill holes on the material using the cutting force generated by high rotation. Laser drilling can also be used, in which the material is irradiated with a high-power density laser beam, quickly heated to the vaporization temperature and evaporated to form holes. Chemical etching can also be used, in which the protecting membrane is removed from the area to be etched after exposure and development, and during etching the area is contacted with chemical corrosion solution to achieve the molding effect of forming a concave-convex or a hollow out. Needle shaped objects can also be designed to pierce holes, in which the needles can be carried on a roller or on a template and can be hot or cold. Holes can also be formed by rolling, in which a rotating roller with a smooth surface or with a certain shape is rolled to produce products with a certain shape. Ultrasonic drilling can also be used, in which the output signal is sent to a transducer of piezoelectric ceramics which converts ultrasonic electrical energy into mechanical vibration energy, and the vibration head is repeatedly vibrated with the combination of grinding powder (usually steel sand) and water to cause the processed parts to be worn through and form suitable small holes.

### Preparation of Laminates:

The film, which is prepared according to the formula and method of the present invention, can be laminated with various fabric structures and fabric components listed in claim 9. The laminate can be a two-layer structure, a sandwich three-layer structure, or a structure with more than three layers. The laminating method used can be roller coating or spraying with liquid adhesive, or roller coating or spraying with hot melted adhesive. It can also be mesh printing with hot melted adhesive in which the film is laminated after rolling, or it can also be bonded by burning and pasting. At final the laminate of the present invention is formed.

### Example 1: Effect of the thickness of the film

According to the above film-preparing process, a series of films were prepared to investigate the influence of the film thickness on its moisture permeability (NW), hydrostatic pressure(HSP), and number of washing times (the hydrostatic pressure after some times of washing). The results are shown in Table 1, where the prepared film does not comprise any fresh thermoplastic elastomer.

**Table 1: Relationship between thickness and typical product performance**

| Experimental No. | | 11 | 12 | 13 | 14 | 15 | 16 | 17 | 18 | 19 | 120 |
|---|---|---|---|---|---|---|---|---|---|---|---|
| Thickness | | 3 µm | 8 µm | 10 µm | 15 µm | 20 µm | 25 µm | 30 µm | 35 µm | 100 µm | 200 µm |
| Moisture permeability g/m²*24h | | 128,000 | 125,000 | 120,000 | 110,000 | 90,000 | 40,000 | 25,000 | 22,000 | 3,000 | 500 |
| HSP mm H₂O after washing | 0 times | 5000 | 8000 | 10000 | 20000 | 25000 | 30000 | >35000 | >35000 | >35000 | >35000 |
| | 5 times | 4500 | 6000 | 8000 | 20000 | 25000 | 30000 | >35000 | >35000 | >35000 | >35000 |
| | 10 times | 3000 | 5000 | 8000 | 20000 | 25000 | 30000 | >35000 | >35000 | >35000 | >35000 |
| | 20 times | 1000 | 3000 | 6000 | 10000 | 15000 | 25000 | >35000 | >35000 | >35000 | >35000 |
| | 50 times | 200 | 300 | 3000 | 3000 | 10000 | 20000 | >35000 | >35000 | >35000 | >35000 |

The data in Table 1 indicates that the thinner the film thickness the higher the moisture permeability, the thicker the film thickness the higher the hydrostatic pressure, and the less of washing times the smaller of its effect on the hydrostatic pressure.

Therefore, when considering the use of the film of the present invention, it is necessary to consider the influence of thickness and choose an appropriate thickness.

### Example 2: Effect of viscosity modifier content

According to the above film-preparing process, a series of films were prepared to investigate the effects of the dosage of viscosity modifier on the moisture permeability, hydrostatic pressure (HSP), number of washing times (the hydrostatic pressure after some times of washing), and hand feel (in term of elastic modulus). The results are shown in Table 2, where the prepared film does not comprise any fresh thermoplastic elastomer with a thickness of 15µm.

**Table 2: Relationship between the influence of viscosity modifiers on product performance**

| Experimental No. | | 120 | 121 | 122 | 123 | 14 | 124 | 125 | 126 |
|---|---|---|---|---|---|---|---|---|---|
| % of viscosity modifier | | 0 | 0.001% | 0.005% | 0.01% | 0.1% | 0.3% | 0.5% | 1% |
| Longitudinal tensile strength, MPa | | - | 24 | 24.5 | 27 | 32 | 35 | 43 | 45 |
| Film forming ability | | no film | unstable | unstable | stable | stable | stable | stable | stable |
| Moisture permeability, g/m²*24h | | - | 110,000 | 110,000 | 110,000 | 110,000 | 110,000 | 50,000 | 2000 |
| Elastic modulus (hand feel), MPa | | - | 63 | 65 | 62 | 65 | 80 | 200 | 500 |
| HSP mm H₂O after washing | 0 times | - | 20000 | 20000 | 20000 | 20000 | 20000 | 20000 | 20000 |
| | 5 times | - | 20000 | 20000 | 20000 | 20000 | 20000 | 20000 | 20000 |
| | 10 times | | 20000 | 20000 | 20000 | 20000 | 20000 | 20000 | 20000 |
| | 20 times | | 2000 | 6000 | 8000 | 10000 | 13000 | 15000 | 20000 |
| | 50 times | | 300 | 2000 | 3000 | 3000 | 5000 | 8000 | 20000 |

From the data in Table 2 it can be found that for general waste thermoplastic elastomer, without any addition of viscosity modifier or just with low concentrations of viscosity modifier, only liquid substances can be obtained during film making, and it is not possible to form a film or form a stable film. Of course, if the waste thermoplastic elastomer itself comprises a viscosity modifier, it is a different matter.

### Example 3: Effect of the ratio of waste thermoplastic elastomer

According to the above film-preparing process, a series of films were prepared to investigate the effects of different proportions of waste thermoplastic elastomer on moisture permeability, hydrostatic pressure (HSP), number of washing times (the hydrostatic pressure after some times of washing), and hand feel (in term of elastic modulus). The results are shown in Table 3, where the thickness of the prepared film is 15µm.

**Table 3: Influence of different ratios of waste thermoplastic elastomer on product performance**

| Experimental No. | | 127 | 128 | 129 | 130 | 131 | 132 | 14 |
|---|---|---|---|---|---|---|---|---|
| Proportions of on-line off-cutting material | | 5% | 10% | 25% | 50% | 75% | 85% | 99.8% (no fresh material) |
| Moisture permeability, g/m²*24h | | 110,000 | 110,000 | 110,000 | 110,000 | 110,000 | 110,000 | 110,000 |
| Elastic modulus (hand feel), MPa | | 75 | 76 | 78 | 73 | 68 | 65 | 65 |
| HSP mm H₂O after washing | 0 times | 20000 | 20000 | 20000 | 20000 | 20000 | 20000 | 20000 |
| | 5 times | 20000 | 20000 | 20000 | 20000 | 20000 | 20000 | 20000 |
| | 10 times | 20000 | 20000 | 20000 | 20000 | 20000 | 20000 | 20000 |
| | 20 times | 2000 | 10000 | 8000 | 10000 | 10000 | 10000 | 10000 |
| | 50 times | 8000 | 6000 | 5000 | 5000 | 4000 | 3000 | 3000 |

From the data in Table 3 it can be found that even when the used material is all waste thermoplastic elastomer except for viscosity modifier and slipping agent and no fresh thermoplastic elastomer is used, the prepared films still show excellent moisture permeability, hydrostatic pressure, and tactile properties.

### Example 4: Effect of Different Materials

According to the above film-preparing process, a series of films were prepared to investigate the effects of different materials (polyester elastomer, nylon elastomer, and bio-based elastomer) on moisture permeability, hydrostatic pressure (HSP), number of washing times (the hydrostatic pressure after some times of washing), and hand feel (in term of elastic modulus). The results are shown in Table 4, where the prepared film does not comprise any fresh thermoplastic elastomer with a thickness of 15µm.

**Table 4: Influence of different materials on product performance**

| Experimental No. | | 14 | 133 | 134 | 135 |
|---|---|---|---|---|---|
| Component of off-cutting material | | polyester elastomer | nylon elastomer | bio-based elastomer | mixed elastomer |
| Melting point, °C | | 180 | 165 | 150 | 170 |
| Moisture permeability, g/m²*24h | | 110,000 | 70,000 | 180,000 | 120,000 |
| Elastic modulus (hand feel), MPa | | 65 | 58 | 42 | 45 |
| HSP, mmH₂O | 0 times | 20000 | 20000 | 20000 | 20000 |
| HSP, mmH₂O | 5 times | 20000 | 20000 | 18000 | 18000 |
| HSP, mmH₂O | 10 times | 20000 | 15000 | 8000 | 18000 |
| HSP, mmH₂O | 20 times | 10000 | 8000 | 1000 | 8000 |
| HSP, mmH₂O | 50 times | 3000 | 3000 | 200 | 2000 |

From the data in Table 4 it can be found that the films prepared from different off-cutting materials such as polyester elastomer, nylon elastomer, bio based elastomer, or their mixtures show excellent moisture permeability, hydrostatic pressure, and tactile properties. The reason may be that these materials have similar melting points.

### Example 5: Effect of film structure

According to the above film-preparing process, a series of films were prepared to investigate the effects of both porous and non-porous films on moisture permeability, hydrostatic pressure (HSP), number of washing times (the hydrostatic pressure after some times of washing), and hand feel (in term of elastic modulus). The results are shown in Table 5, where the prepared films do not comprise any fresh thermoplastic elastomer with a thickness of 15µm.

**Table 5: Influence having pores, no pores, and different pores on product performance**

| Experimental No. | | 14 | 137 | 138 | 139 | 140 | 141 |
|---|---|---|---|---|---|---|---|
| Pore structure | | no physical pore as in Fig. 1 | structure as in Fig. 2 | structure as in Fig. 3 | structure as in Fig. 4 | structure as in Fig. 5 | structure as in Fig. 6 |
| Elongation at break,% | | 530 | 49 | 350 | 250 | 50 | 250 |
| Moisture permeability, g/m²*24h | | 110,000 | 130,000 | 120,000 | 10,000 | 110,000 | >200, 000 |
| Elastic modulus (hand feel), MPa | | 65 | 40 | 75 | 90 | 120 | 62 |
| HSP, mmH₂O | 0 times | 20000 | 10000 | 20000 | 10000 | 10000 | 2000 |
| HSP, mmH₂O | 5 times | 20000 | 8000 | 20000 | 8000 | 10000 | 1000 |
| HSP, mmH₂O | 10 times | 20000 | 8000 | 20000 | 8000 | 8000 | 300 |
| HSP, mmH₂O | 20 times | 10000 | 300 | 10000 | 3000 | 1000 | 200 |
| HSP, mmH₂O | 50 times | 3000 | broken | 3000 | broken | stratified | broken |

From the data in Table 5, it can be found that the moisture permeability of various films does not differ too much for different structures, but there are certain differences in strength, washing times, and elastic modulus. On the whole the performance of non-porous film is the best, and the performances of films with solution pores, physical stretching pores and regular physical mechanical pores respectively are also good.

### Example 6

The inventors conducted experiments with experimental numbers 142-147 for a formula of 75% of waste thermoplastic elastomer, with experimental numbers 148-153 for a formula of 50% of waste thermoplastic elastomer, with experimental numbers 154-159 for a formula of 25% of waste thermoplastic elastomer, and with experimental numbers 160-164 for a formula of 10% of waste thermoplastic elastomer. The products were prepared using the process shown in figures 2 to 6, and their performances were similar to that shown in Table 5.

## Claims

1. A film prepared from waste thermoplastic elastomer, with a thickness of 3µm-1000µm, Among them, the film comprises:
0.5% -99.8% of waste thermoplastic elastomer,
0.01% -3% of viscosity modifier,
0.01% -10% of slipping agent used for preventing the prepared film from being adhered when the film is rolled, and
0% -99% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein viscosity modifier is a reactive viscosity modifier and/or a non-reactive viscosity modifier, in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

2. The film according to claim 1, wherein the film comprises:
2.5% -99.8% of waste thermoplastic elastomer,
0.01% -2% of viscosity modifier,
0.01% -10% of slipping agent without influence on subsequent bonding, and
0% -90% fresh thermoplastic elastomer.

3. The film according to claim 1, wherein the waste thermoplastic elastomer is a leftover material and/or an off-cutting material.

4. The film according to claim 1, wherein the reactive viscosity modifier is one or more alcohol chain extenders selected from the group consisting of 1,4-butanediol (BDO), 1,6-hexanediol, glycerol, trimethylolpropane, diethylene glycol (DEG), triethylene glycol, neopentyl glycol (NPG), sorbitol, and diethylaminoethanol (DEAE).

5. The film according to claim 1, wherein the reactive viscosity modifier is one or more amine chain extenders and/or ester chain extenders selected from the group consisting of MOCA, liquid MOCA modified with formaldehyde, ethylenediamine (DA), N,N-dihydroxy (diisopropyl) aniline (HPA), hydroquinone bis(β-hydroxyethyl) ether (HQEE), bifunctional acid derivatives, isocyanates, anhydrides, epoxide, and glycidyl esters and their multifunctional derivatives.

6. The film according to claim 1, wherein the reactive viscosity modifier is an epoxide.

7. The film according to claim 1, wherein the film further comprises 0.1-45% toner.

8. The film according to one of claims 1-7, wherein the use of the film is one of the following:
(1) bonding onto clothing fabric with a film thickness of 5µm-50µm,
(2) bonding onto shoe fabric with a film or sheet thickness of 10-500µm,
(3) bonding onto the surface fabric for gloves or hats with a film thickness of 8-80µm,
(4) bonding onto the surface fabric for a luggage with a film or sheet thickness of 50-1000µm,
(5) bonding onto the surface or as packaging for instruments which require moisture permeability with a film or sheet thickness of 15-1000µm, and
(6) bonding onto the surface or as packaging for a food which requires moisture permeability with a film or sheet thickness of 15-1000µm,

9. A laminate containing waste thermoplastic elastomer, comprising:
at least one layer formed by non-woven and/or textile fabrics with a gram weight of 7-1000 gsm, and
at least one layer formed by a composition containing waste thermoplastic elastomer with a thickness of 5-1000µm,
wherein the composition containing waste thermoplastic elastomer comprises
0.5% -99.8% of waste thermoplastic elastomer,
0.01% -3% of viscosity modifier,
0.01% -10% of slipping agent used for preventing the prepared layer from being adhered when the film is rolled, and
0% -99% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein the viscosity modifier is a reactive viscosity modifier and/or a non-reactive viscosity modifier in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

10. The laminate according to claim 9, wherein the laminate further comprises an adhesive layer between the layer formed by non-woven fabric and/or textile fabric and the layer formed by a composition containing waste thermoplastic elastomer, in which said adhesive layer is formed by hot melt adhesive, solvent adhesive, or water-based adhesive with a gram weight of 3-80 gsm.
